# EUROPÄISCHE PATENTSCHRIFT

(11) **EP 3 370 130 B1**
(45) Veröffentlichungstag und Bekanntmachung des Hinweises auf die Patenterteilung: **24.07.2019**
(21) Anmeldenummer: 18156670.4
(22) Anmeldetag: 14.02.2018
(51) Int. Cl.: G05D 16/20, F16K 11/07, F16K 3/34, F16K 31/06

(54) **DRUCKREGELVENTIL MIT DRUCKÜBERSETZUNGSSTIFT**
PRESSURE CONTROL VALVE WITH PRESSURE TRANSMISSION ROD
SOUPAPE DE RÉGLAGE DE PRESSION À TIGE DE TRANSMISSION DE PRESSION

(30) Priorität: 01.03.2017 DE 102017203286
(43) Veröffentlichungstag der Anmeldung: 05.09.2018
(73) Patentinhaber: Robert Bosch GmbH, 70442 Stuttgart (DE)
(72) Erfinder: Zaiser, Liebhart, 97753 Karlstadt (DE)
(74) Vertreter: Maiß, Harald

(56) Entgegenhaltungen:
- EP-A1- 2 960 561
- EP-A2- 1 076 278
- US-A- 5 571 248

## Beschreibung

Die Erfindung betrifft ein Druckregelventil gemäß dem Oberbegriff von Anspruch 1.

Druckregelventile haben typischerweise einen Zulaufanschluss, einen Rücklaufanschluss und einen Ausgangsanschluss. Mittels eines durch einen Elektromagneten betätigten Steuerschiebers wird der Druck am Ausgangsanschluss auf einen der Magnetkraft entsprechenden Wert eingeregelt. Der entsprechende Anker ist oft, wie beispielsweise bei der US 5 571 248 oder der DE 10 2014 004 796 A1, vom Druck am Rücklaufanschluss umgeben. Der Druck um den Anker herum ist damit vergleichsweise niedrig. Luftbläschen im Druckfluid um den Anker herum werden damit nicht selbsttätig aus dem Druckregelventil herausgefördert. Vielmehr ist eine aufwändige Entlüftung erforderlich.

Weiter bewirkt bei Druckregelventilen der Druck am Arbeitsanschluss typischerweise eine in Richtung der Längsachse gerichtete Kraft am Steuerschieber. Zu diesem Zweck ist beispielsweise aus der US 5 571 248 ein Druckübersetzungsstift bekannt, welcher an einem Längsende in den Steuerschieber hineinragt. Der Steuerschieber ist so gestaltet, dass der Druck am Ausgangsanschluss effektiv nur auf eine Fläche des Steuerschiebers wirkt, welche gleich der Querschnittsfläche des Druckübersetzungsstiftes ist.

Bei dem Druckregelventil gemäß EP 1 209 327 A2 ist stattdessen an der Außenumfangsfläche des Steuerschiebers ein Durchmessersprung vorgesehen, wobei effektiv nur die entsprechende Ringfläche vom Druck am Ausgangsanschluss beaufschlagt ist. Der Nachteil dieser Lösung besteht darin, dass die genannte Ringfläche vergleichsweise groß ist. Wollte man diese verkleinern, so müsste der Durchmessersprung derart klein gewählt werden, dass er nicht mehr prozesssicher herstellbar ist. Der oben angesprochene Druckübersetzungsstift kann dagegen eine sehr kleine Querschnittsfläche aufweisen. Bei der EP 1 209 327 A2 ist der Anker darüber hinaus vom Druck am Arbeitsanschluss umgeben, so dass die EP 1 209 327 A2 als nächstliegender Stand der Technik angesehen wird.

Ein Vorteil des vorliegenden Druckregelventils besteht darin, dass eine manuelle Entlüftung des ersten und/oder des zweiten Fluidraums, welche vom Anker definiert werden, nicht erforderlich ist. Vielmehr werden dort im Druckfluid eingeschlossene Luftbläschen selbsttätig aus dem Druckregelventil herausgefördert. Bei dem Druckfluid handelt es sich vorzugsweise um eine Flüssigkeit und höchst vorzugsweise um Hydrauliköl. Weiter kann die elektromagnetische Betätigung besonders klein ausgelegt bzw. der Druck am Ausgangsanschluss hoch gewählt werden. Insbesondere kann die effektive Fläche, über welche der Druck am Ausgangsanschluss auf den Steuerschieber wirkt, klein gewählt werden, wobei das Druckregelventil dennoch prozesssicher herstellbar ist.

Gemäß dem selbständigen Anspruch wird vorgeschlagen, dass der dritte Fluidraum abschnittsweise von einem Druckübersetzungsstift begrenzt wird, welcher sich mit einer konstanten zweiten Außenquerschnittsform in Richtung der Längsachse erstreckt, wobei der Druckübersetzungsstift mit seinem dem Anker zugewandten Ende in den Steuerschieber hinein ragt, wobei er mit seinem vom Anker abgewandten Ende zumindest mittelbar am Gehäuse abgestützt ist, wobei eine hydraulisch wirksame Fläche der zweiten Außenquerschnittsform größer als eine hydraulisch wirksame Fläche der ersten Außenquerschnittsform ist. Im Unterschied zur US 5 571 248 wird die effektive Fläche, auf welche der Druck am Ausgangsanschluss wirkt, nicht allein durch den Druckübersetzungsstift bewirkt. Stattdessen wird diese Fläche auch von der Koppelstange beeinflusst. Die Koppelstange wird ähnlich wie bei der EP 1 209 327 A2 genutzt, um den vergleichsweise hohen Druck am Ausgangsanschluss über den dritten Fluidraum in den ersten Fluidraum einzuleiten.

Im Ergebnis bewirkt der Druck am Ausgangsanschluss eine Kraft auf den Steuerschieber, welche in Richtung der Längsachse auf den Anker zu wirkt. Die Magnetkraft des Ankers wirkt der zuvor genannten Kraft entgegen. Es stellt sich ein Kräftegleichgewicht ein, so dass der Ausgangsdruck proportional zur Magnetkraft des Ankers ist.

Der erste Fluidraum ist vorzugsweise mit dem zweiten Fluidraum fluidisch verbunden, höchst vorzugsweise über Bohrungen im Anker. Damit wird die Bewegung des Ankers durch das Druckfluid im Wesentlichen nicht behindert. Im ersten und im zweiten Fluidraum wirkt dementsprechend der Druck am Ausgangsanschluss. Der vergleichsweise hohe Ausgangsdruck bewirkt, dass kleinste Luftbläschen zuverlässig aus dem ersten bzw. dem zweiten Fluidraum herausgefördert werden.

In den abhängigen Ansprüchen sind vorteilhafte Weiterbildungen und Verbesserungen der Erfindung angegeben.

Es kann vorgesehen sein, dass der Steuerschieber derart ausgebildet ist, dass die vom Druck am Zulaufanschluss auf den Steuerschieber in Richtung der Längsachse ausgeübte hydraulische Kraft Null beträgt. Damit wird die Druckregelung vom Druck am Zulaufanschluss im Wesentlichen nicht gestört. Vorzugsweise ist der Steuerschieber in einer bezüglich der Längsachse kreiszylindrischen Schieberbohrung aufgenommen, wobei der Steuerschieber mit einer ringförmig um die Längsachse umlaufenden ersten Nut versehen ist, wobei der Druck am Zulaufanschluss den Steuerschieber ausschließlich an der Oberfläche der ersten Nut beaufschlagt.

Es kann vorgesehen sein, dass der Steuerschieber derart ausgebildet ist, dass die vom Druck am Rücklaufanschluss auf den Steuerschieber in Richtung der Längsachse ausgeübte hydraulische Kraft im Wesentlichen Null beträgt. Damit wird die Druckregelung vom Druck am Zulaufanschluss im Wesentlichen nicht gestört. Es kann in Kauf genommen werden, dass der vergleichsweise niedrige Druck am Rücklaufanschluss effektiv auf die gleiche Fläche wirkt wie der Druck am Ausgangsanschluss, da die Druckreglung hierdurch nur unwesentlich beeinflusst wird. Vorzugsweise ist der Steuerschieber in einer bezüglich der Längsachse kreiszylindrischen Schieberbohrung aufgenommen, wobei der Steuerschieber mit einer ringförmig um die Längsachse umlaufenden zweiten Nut versehen ist, wobei der Druck am Rücklaufanschluss den Steuerschieber an der Oberfläche der zweiten Nut beaufschlagt. Darüber hinaus kann der Druck am Rücklaufanschluss den Steuerschieber an seinen beiden gegenüberliegenden Längsenden beaufschlagen.

Es kann vorgesehen sein, dass der Steuerschieber, die Koppelstange und der Anker derart ausgebildet sind, dass der Druck am Ausgangsanschluss in Richtung der Längsachse effektiv auf eine Flächendifferenz zwischen der ersten Außenquerschnittsform und der zweiten Außenquerschnittsform wirkt. Dementsprechend sind der Steuerschieber und der Anker gemeinsam, mit Ausnahme der Flächendifferenz zwischen der ersten und der zweiten Außenquerschnittsform, druckausgeglichen ausgebildet. Der Druck am Ausgangsanschluss wirkt vorzugsweise ausschließlich im ersten, im zweiten, im dritten und gewünschtenfalls im fünften Fluidraum auf den Steuerschieber ein.

Es kann vorgesehen sein, dass eine erste und eine zweite Nut einen ersten Steg am Steuerschieber gemeinsam begrenzen, wobei der erste Steg mit wenigstens einer quer zur Längsachsachse verlaufenden ersten Radialbohrung versehen ist, welche den Ausgangsanschluss mit dem dritten Fluidraum verbindet. Der erste Steg begrenzt vorzugsweise die erste und die zweite Blende. Die erste und die zweite Blende werden vorzugsweise von wenigstens einer zweiten Radialbohrung im Gehäuse begrenzt. Der in der wenigstens einen ersten Radialbohrung anliegende Druck bewirkt keine in Richtung der Längsachse gerichtete Kraft auf den Steuerschieber.

Es kann vorgesehen sein, dass eine freie Querschnittsfläche der ersten Blende bei einer Bewegung des Steuerschiebers zum Polrohr hin kleiner wird. Die zweite Blende wird bei dieser Bewegung entsprechend größer. Vorzugsweise ist entweder die erste oder die zweite Blende geöffnet. Eine Nullüberdeckung ist vorzugsweise nicht vorhanden.

Es kann vorgesehen sein, dass die Koppelstange und der Steuerschieber gesondert voneinander ausgebildet sind, wobei sie fest miteinander verbunden sind. Hierdurch muss bei der Herstellung des Druckregelventils besonders wenig Material zerspant werden. Es ist aber auch denkbar, dass die Koppelstange und der Steuerschieber einstückig miteinander ausgebildet sind.

Es kann vorgesehen sein, dass das Polrohr gesondert vom Gehäuse ausgebildet ist, wobei es fest mit dem Gehäuse verbunden ist. Damit kann der Anker problemlos in das Polrohr eingebaut werden. Gleichzeitig kann die Verbindung zwischen dem Gehäuse und dem Polrohr druckdicht ausgeführt werden. Das Polrohr ist vorzugsweise von einer Magnetspule umgeben. Die Magnetspule ist vorzugsweise von einem Spulenmantel umgeben, welcher höchst vorzugsweise aus einem ferromagnetischen Material besteht.

Es kann vorgesehen sein, dass der Steuerschieber zusammen mit dem Gehäuse einen vierten Fluidraum begrenzt, dessen Volumen durch Bewegung des Steuerschiebers veränderbar ist, wobei im Steuerschieber ein Verbindungskanal angeordnet ist, welcher den vierten Fluidraum fluidisch mit dem Rücklaufanschluss verbindet. Der vierte Fluidraum ist vorzugsweise an einem Längsende des Steuerschiebers angeordnet, welches dem Anker zugewandt ist. Aufgrund des Verbindungskanals wird die Bewegung des Steuerschiebers durch das Druckfluid im Wesentlichen nicht behindert.

Es kann vorgesehen sein, dass der Rücklaufanschluss zumindest abschnittsweise an einem vom Polrohr abgewandten Längsende des Gehäuses angeordnet ist. Der Ausgangsanschluss ist in Richtung der Längsachse vorzugsweise zwischen dem Zulauf- und dem Rücklaufanschluss angeordnet.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnung näher erläutert. Es zeigt:

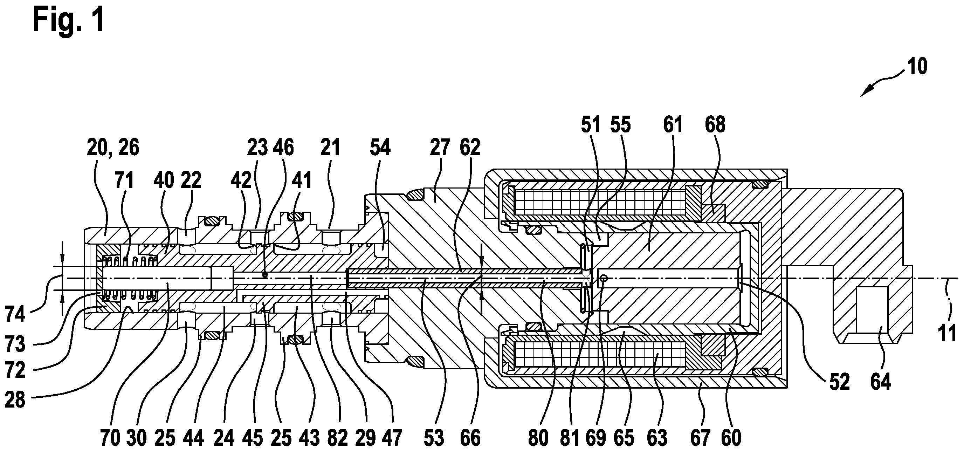

- Fig. 1: einen Längsschnitt eines erfindungsgemäßen Druckregelventils.

Fig. 1 zeigt einen Längsschnitt eines erfindungsgemäßen Druckregelventils 10, wobei die Schnittebene die Längsachse 11 enthält. Das Druckregelventil 10 ist als Einschraubventil ausgebildet, wobei es zum Einbau in eine (nicht dargestellte) Stufenbohrung in einem Ventilblock vorgesehen ist. Es hat ein Gehäuse 20, welches aus einem ersten und einem zweiten Gehäuseteil 26; 27 zusammengesetzt ist, die wiederum fest miteinander verbunden sind. Das Gehäuse 20 kann auch einstückig ausgebildet sein, wobei die vorliegende zweiteilige Konstruktion kostengünstiger ist. An der Außenumfangsfläche des ersten Gehäuseteils 26 sind in Richtung der Längsachse nacheinander der Rücklaufanschluss 22, der Ausgangsanschluss 23 und der Zulaufanschluss 21 angeordnet, wobei die genannten Anschlüsse 22; 23; 21 durch ringartig um die Längsachse 11 umlaufende zweite Stege 25 fluiddicht voneinander abgegrenzt sind. Im Inneren hat das erste Gehäuseteil 26 eine bezüglich der Längsachse 11 kreiszylindrische Schieberbohrung 28, welche besonders einfach herstellbar ist. Am in Fig. 1 linken Ende ist eine gesonderte Stützplatte 72 fest in die Schieberbohrung 28 eingebaut. Die Stützplatte 72 ist mit mehreren Längsbohrungen 73 versehen. Am in Fig. 1 linken, offenen Ende der Schieberbohrung 28 liegt ebenfalls der Druck am Rücklaufanschluss 22 an, welcher über die Längsbohrungen 73 auf die dortige Stirnfläche des Steuerschiebers 40 wirkt. Am gegenüberliegenden, in Fig. 1 rechten Längsende des Steuerschiebers 40 ist ein vierter Fluidraum 54 vorgesehen, in dem ebenfalls der Druck am Rücklaufanschluss 22 anliegt, so dass auf beide Stirnflächen des Steuerschiebers 40 der gleiche Druck wirkt. Der Druck am Rücklaufanschluss 22 ist vorzugsweise gering.

Der Steuerschieber 40 hat eine erste und eine zweite Nut 43; 44, welche ringartig um die Längsachse 11 umlaufen. Die erste und die zweite Nut 43; 44 begrenzen einen gemeinsamen ersten Steg 45 am Steuerschieber 40. Gegenüberliegend zum ersten Steg 45 sind mehrere zweite Radialbohrungen 24 angeordnet, welche das Gehäuse 40 quer zur Längsachse 11 durchsetzen, wobei sie zum Ausgangsanschluss 23 führen. Die zweiten Radialbohrungen 24 bilden zusammen mit dem ersten Steg 45 eine erste und eine zweite Blende 41; 42, welche bei einer Bewegung des Steuerschiebers 40 gegensinnig verstellt werden. Dabei ist vorzugsweise entweder die erste oder die zweite Blende 41; 42 geöffnet, wobei höchst vorzugsweise keine Nullüberdeckung vorhanden ist. Bei einer Bewegung des Steuerschiebers 40 auf das Polrohr 60 zu vergrößert sich die zweite Blende 42, wobei sich die erste Blende 41 verkleinert.

Über die erste Blende 41 ist der Zulaufanschluss 21 mit dem Ausgangsanschluss 23 fluidisch verbunden. Im entsprechenden Fluidströmungspfad sind die dritten Radialbohrungen 29 im Gehäuse 20 angeordnet, welche vorzugsweise in keiner Stellung des Steuerschiebers 40 überdeckt sind. Über die zweite Blende 42 ist der Rücklaufanschluss 22 mit dem Ausgangsanschluss 23 verbunden. Im entsprechenden Fluidströmungspfad sind die vierten Radialbohrungen 30 im Gehäuse 20 angeordnet, welche vorzugsweise in keiner Stellung des Steuerschiebers 40 überdeckt sind.

Am in Fig. 1 rechten Längsende ist ein gesondertes Polrohr 60 am Gehäuse 20 befestigt, wobei die entsprechende Verbindung fluiddicht ausgeführt ist. Das Polrohr 60 ist topfartig ausgebildet, so dass es am vom Gehäuse 20 abgewandten Längsende fluiddicht verschlossen ist. In dem Polrohr 60 ist ein gesonderter Anker 61 aufgenommen, welcher in Richtung der Längsachse 11 beweglich ist. Der Anker 61 grenzt einen ersten und einen zweiten Fluidraum 51; 52 im Polrohr 60 voneinander ab. Diese sind über Bohrungen 69 im Anker 61 fluidisch miteinander verbunden, so dass eingeschlossenes Druckfluid die Bewegung des Ankers 61 nicht behindert. Aufgrund der stufenartigen Ausführung des vorliegenden Ankers 61 kann in der linken Endstellung ein abgeschlossener fünfter Fluidraum 55 entstehen, welcher über die genannten Bohrungen 69 im Anker 61 ebenfalls mit dem ersten und dem zweiten Fluidraum 51; 52 in Fluidaustauschverbindung steht.

Um das Polrohr 60 herum ist eine Magnetspule 63 angeordnet, welche wiederum von einem topfartigen Spulenmantel 67 umgeben ist. Das Polrohr 60, das zweite Gehäuseteil 27, der Spulenmantel 75 und die Polscheibe 68 bestehen jeweils aus einem ferromagnetischen Material, wie beispielsweise Stahl, wobei sie einen magnetischen Kreis bilden, welcher die Magnetspule 63 ringartig umgibt. Im Polrohr 60 ist ein Flussunterbrechungsabschnitt 65 angeordnet, welcher diesen magnetischen Kreis unterbricht. Der Flussunterbrechungsabschnitt 65 kann aus einem nichtmagnetischen Material, wie beispielsweise Kupfer, bestehen. Es ist aber auch denkbar, die Wandstärke des Polrohrs 60 im Flussunterbrechungsabschnitt 65 so dünn auszuführen, dass das Polrohr 60 dort in magnetische Sättigung gerät, wenn die Magnetspule 63 bestromt wird. Wenn die Magnetspule 63 bestromt wird, wirkt auf den Anker 61 eine Kraft, welche diesen in Richtung einer Stellung drängt, in welcher der genannte magnetische Kreis über den Anker 61 geschlossen ist. Die genannte Kraft wirkt dementsprechend in eine Richtung auf den Steuerschieber 40 zu. Die Polscheibe 68 ist mit Ausnehmungen versehen, durch welche elektrische Leitungen zur Anschlussbuchse 64 geführt werden. Die Magnetspule 63 und die Anschlussbuchse 64 werden vorzugsweise gemeinsam im Kunststoffspritzgussverfahren hergestellt, wobei die Polscheibe 68 mit umspritzt wird.

Der Anker 61 ist über eine gesonderte Koppelstange 62 mit dem Steuerschieber 40 bewegungsgekoppelt. Die Koppelstange 62 ist vorliegend mit dem Steuerschieber 40 fest verbunden, wobei die entsprechende Verbindung fluiddicht ausgebildet ist. Beispielsweise ist die Koppelstange 62 in eine angepasste Ausnehmung des Steuerschiebers 40 eingepresst. Die Koppelstange 62 kann wahlweise lose am Anker 61 anliegen oder fest mit diesem verbunden sein. Hierbei ist anzumerken, dass der Steuerschieber 40 und die Koppelstange 62 von der Feder 71 gegen den Anker 61 gedrückt werden, so dass die genannte Bewegungskopplung gegeben ist. Die Feder 71 ist als Schraubenfeder ausgebildet, welche konzentrisch zur Längsachse 11 angeordnet ist. Sie ist zwischen der Stützplatte 72 und dem Steuerschieber 40 unter Vorspannung eingebaut, wobei sie den Druckübersetzungsstift 70 umgibt.

Die Außenumfangsfläche der Koppelstange 62 erstreckt sich mit einer konstanten ersten Außenquerschnittsform entlang der Längsachse 11. Die erste Außenquerschnittsform ist vorzugsweise kreisförmig und konzentrisch zur Längsachse 11 ausgebildet. Die Koppelstange 62 ist vorzugsweise derart spielarm an das Gehäuse 20 angepasst, dass zwischen der Koppelstange 62 und dem Gehäuse 20, insbesondere dem zweiten Gehäuseteil 27, im Wesentlichen kein Druckfluid durchtreten kann.

Im Inneren der Koppelstange 62 ist eine Längsbohrung 80 vorgesehen, welche einen Abschnitt eines dritten Fluidraums 53 bildet. Die Längsbohrung 80 ist vorzugsweise kreiszylindrisch bezüglich der Längsachse 11 ausgebildet. An dem dem Anker 61 zugewandten Längsende der Längsbohrung 80 ist wenigstens eine Querbohrung 81 angeordnet, so dass der dritte Fluidraum 53 mit dem ersten Fluidraum 51 fluidisch verbunden ist. Die Längsbohrung 80 in der Koppelstange 62 wird von einer Längsbohrung 82 im Steuerschieber 40 in Richtung der Längsachse 11 fluchtend fortgesetzt. Die Längsbohrung 82 ist ebenfalls Bestandteil des dritten Fluidraums 63. Im Bereich des ersten Stegs 45 wird der Steuerschieber 40 von ersten Radialbohrungen 46 quer zur Längsachse 11 durchsetzt. Über die ersten Radialbohrungen 46 besteht unabhängig von der Stellung des Steuerschiebers 40 eine Fluidaustauschverbindung zwischen dem Ausgangsanschluss 23 und dem dritten Fluidraum 53. Im Ergebnis liegt im ersten, im zweiten, im dritten und im fünften Fluidraum 51; 52; 53; 55 der Druck am Ausgangsanschluss 23 an. Die betroffenen Teile sind somit bezüglich diesem Druck weitgehend druckausgeglichen. Einzig die Differenz zwischen der Fläche 66 der ersten Außenquerschnittsform der Koppelstange 62 und der Fläche 74 der zweiten Außenquerschnittsform des Druckübersetzungsstifts 70 wirkt eine in Richtung der Längsachse 11 gerichtete Kraft auf den Steuerscheiber 40. Erfindungsgemäß ist die Fläche 74 der zweiten Außenquerschnittsform größer als die Fläche 66 der ersten Außenquerschnittsform, so dass die durch den Druck am Ausgangsanschluss 23 bewirkte Kraft auf den Anker 61 zu gerichtet ist. Im Ergebnis stellt sich der Druck am Ausgangsanschluss 23 so ein, dass die genannte Druckkraft und die Magnetkraft des Ankers 61 im Gleichgewicht sind. Die genannte Flächendifferenz kann dabei sehr klein gewählt werden, so dass die Magnetspule und der Anker ebenfalls klein dimensioniert werden können bzw. so dass der Druck am Ausgangsanschluss 23 hoch sein kann. Trotz dieser kleinen Flächendifferenz ergibt sich eine vergleichsweise große Durchmesserdifferenz zwischen der Koppelstange 62 und dem Druckübersetzungsstift 70, welche prozesssicher herstellbar ist. Wollte man die entsprechende Flächendifferenz wie bei der EP 1 209 327 A2 an der Außenumfangsfläche des Steuerschiebers bereitstellen, wäre eine extrem kleine Durchmesserdifferenz die Folge, welche nicht mehr prozesssicher herstellbar ist.

Der Druckübersetzungsstift 70 ist bezüglich der Längsachse 11 kreiszylindrisch ausgebildet. Er ragt in den Steuerschieber 40 hinein, wobei er am gegenüberliegenden Ende an der Stützplatte 72 abgestützt ist. Der Druckübersetzungsstift 70 begrenzt mit einer Stirnfläche abschnittsweise den dritten Fluidraum 53. Die Bohrung 82 im Steuerscheiber 40 ist zur Aufnahme des Druckübersetzungsstifts 70 als Stufenbohrung ausgebildet.

Hinzuweisen ist noch auf den Verbindungskanal 47 im Steuerscheiber 40, welcher mit einem Ende in die zweite Nut 44 einmündet, wobei er mit einem gegenüberliegenden Ende in den vierten Fluidraum 54 einmündet. Der vierte Fluidraum 54 steht somit in Fluidaustauschverbindung mit dem Rücklaufanschluss 22, wie oben bereits angesprochen.

### Bezugszeichen

- 10: Druckregelventil
- 11: Längsachse

- 20: Gehäuse
- 21: Zulaufanschluss
- 22: Rücklaufanschluss
- 23: Ausgangsanschluss
- 24: zweite Radialbohrung
- 25: zweiter Steg
- 26: erstes Gehäuseteil
- 27: zweites Gehäuseteil
- 28: Schieberbohrung
- 29: dritte Radialbohrung
- 30: vierte Radialbohrung

- 40: Steuerschieber
- 41: erste Blende
- 42: zweite Blende
- 43: erste Nut
- 44: zweite Nut
- 45: erster Steg
- 46: erste Radialbohrung
- 47: Verbindungskanal

- 51: erster Fluidraum
- 52: zweiter Fluidraum
- 53: dritter Fluidraum
- 54: vierter Fluidraum
- 55: fünfter Fluidraum
- 60: Polrohr
- 61: Anker
- 62: Koppelstange
- 63: Magnetspule
- 64: Anschlussbuchse
- 65: Flussunterbrechungsabschnitt
- 66: hydraulisch wirksame Fläche der ersten Außenquerschnittsform
- 67: Spulenmantel
- 68: Polscheibe
- 69: Bohrung

- 70: Druckübersetzungsstift
- 71: Feder
- 72: Stützplatte
- 73: Längsbohrung
- 74: hydraulisch wirksame Fläche der zweiten Außenquerschnittsform
- 75: Spulenmantel

- 80: Längsbohrung in der Koppelstange
- 81: Querbohrung
- 82: Längsbohrung im Steuerschieber

## Patentansprüche

1. Druckregelventil (10) mit einem Gehäuse (20), in dem ein Steuerschieber (40) in Richtung einer Längsachse (11) beweglich aufgenommen ist, wobei das Gehäuse (20) einen Zulaufanschluss (21), einen Rücklaufanschluss (22) und einen Ausganganschluss (23) aufweist, wobei das Gehäuse (20) zusammen mit dem Steuerschieber (40) eine erste und eine zweite Blende (41; 42) bildet, deren freie Querschnittsflächen durch Bewegung des Steuerschiebers (40) gegensinnig verstellbar sind, wobei der Zulaufanschluss (21) über die erste Blende (41) mit dem Ausgangsanschluss (23) fluidisch verbunden ist, wobei der Rücklaufanschluss (22) über die zweite Blende (42) mit dem Ausgangsanschluss (23) fluidisch verbunden ist, wobei ein Anker (61) vorgesehen ist, welcher in einem Polrohr (60) in Richtung der Längsachse (11) beweglich aufgenommen ist, wobei der Anker (61) einen ersten und einen zweiten Fluidraum (51; 52) in dem Polrohr (60) voneinander abgrenzt, deren Volumina durch Verschiebung des Ankers (61) gegensinnig verstellbar sind, wobei der Anker (61) über eine Koppelstange (62) mit dem Steuerschieber (40) bewegungsgekoppelt ist, wobei sich die Koppelstange (62) mit einer konstanten ersten Außenquerschnittsform in Richtung der Längsachse (11) erstreckt, wobei die Koppelstange (62) und der Steuerschieber (40) in ihrem Inneren einen dritten Fluidraum (53) abschnittsweise begrenzen, welcher sich in Richtung der Längsachse (11) erstreckt, wobei der erste Fluidraum (51) über den dritten Fluidraum (53) fluidisch mit dem Ausgangsanschluss (23) verbunden ist,
**dadurch gekennzeichnet, dass** der dritte Fluidraum (53) abschnittsweise von einem Druckübersetzungsstift (70) begrenzt wird, welcher sich mit einer konstanten zweiten Außenquerschnittsform in Richtung der Längsachse (11) erstreckt, wobei der Druckübersetzungsstift (70) mit seinem dem Anker (61) zugewandten Ende in den Steuerschieber (40) hinein ragt, wobei er mit seinem vom Anker (61) abgewandten Ende zumindest mittelbar am Gehäuse (20) abgestützt ist, wobei eine hydraulisch wirksame Fläche (74) der zweiten Außenquerschnittsform größer als eine hydraulisch wirksame Fläche (66) der ersten Außenquerschnittsform ist.

2. Druckregelventil nach Anspruch 1,
wobei der Steuerschieber (40) derart ausgebildet ist, dass die vom Druck am Zulaufanschluss (21) auf den Steuerschieber (40) in Richtung der Längsachse (11) ausgeübte hydraulische Kraft Null beträgt.

3. Druckregelventil nach einem der vorstehenden Ansprüche,
wobei der Steuerschieber (40) derart ausgebildet ist, dass die vom Druck am Rücklaufanschluss (22) auf den Steuerschieber (40) in Richtung der Längsachse (11) ausgeübte hydraulische Kraft im Wesentlichen Null beträgt.

4. Druckregelventil nach einem der vorstehenden Ansprüche,
wobei der Steuerschieber (40), die Koppelstange (62) und der Anker (61) derart ausgebildet sind, dass der Druck am Ausgangsanschluss (23) in Richtung der Längsachse (11) effektiv auf eine Flächendifferenz zwischen der ersten Außenquerschnittsform und der zweiten Außenquerschnittsform wirkt.

5. Druckregelventil nach Anspruch 4,
wobei eine erste und eine zweite Nut (43; 44) einen ersten Steg (45) am Steuerschieber (40) gemeinsam begrenzen, wobei der erste Steg (45) mit wenigstens einer quer zur Längsachsachse (11) verlaufenden ersten Radialbohrung (46) versehen ist, welche den Ausgangsanschluss (23) mit dem dritten Fluidraum (53) verbindet.

6. Druckregelventil nach einem der vorstehenden Ansprüche,
wobei eine freie Querschnittsfläche der ersten Blende (41) bei einer Bewegung des Steuerschiebers zum Polrohr (60) hin kleiner wird.

7. Druckregelventil nach einem der vorstehenden Ansprüche,
wobei die Koppelstange (62) und der Steuerschieber (40) gesondert voneinander ausgebildet sind, wobei sie fest miteinander verbunden sind.

8. Druckregelventil nach einem der vorstehenden Ansprüche,
wobei das Polrohr (60) gesondert vom Gehäuse (20) ausgebildet ist, wobei es fest mit dem Gehäuse (20) verbunden ist.

9. Druckregelventil nach einem der vorstehenden Ansprüche,
wobei der Steuerschieber (40) zusammen mit dem Gehäuse (20) einen vierten Fluidraum (54) begrenzt, dessen Volumen durch Bewegung des Steuerschiebers (40) veränderbar ist, wobei im Steuerschieber ein Verbindungskanal (47) angeordnet ist, welcher den vierten Fluidraum (54) fluidisch mit dem Rücklaufanschluss (22) verbindet.

10. Druckregelventil nach einem der vorstehenden Ansprüche,
wobei der Rücklaufanschluss (22) zumindest abschnittsweise an einem vom Polrohr (60) abgewandten Längsende des Gehäuses (20) angeordnet ist.

## Claims

1. Pressure regulating valve (10) having a housing (20) in which a control slide valve (40) is accommodated movably in the direction of a longitudinal axis (11), wherein the housing (20) has an inflow port (21), a return flow port (22) and an outlet port (23), wherein the housing (20) forms together with the control slide valve (40) a first and a second orifice (41; 42), the free cross-sectional areas of which are adjustable in opposite directions by movement of the control slide valve (40), wherein the inflow port (21) is fluidically connected via the first orifice (41) to the outlet port (23), wherein the return flow port (22) is fluidically connected via the second orifice (42) to the outlet port (23), wherein an armature (61), which is accommodated in a pole tube (60) movably in the direction of the longitudinal axis (11), is provided, wherein the armature (61) demarcates a first and a second fluid space (51; 52) one from the other in the pole tube (60), the volumes of which are adjustable in opposite directions by displacement of the armature (61), wherein the armature (61) is motionally coupled, via a coupling rod (62), with the control slide valve (40), wherein the coupling rod (62) extends with a constant first outer cross-sectional shape in the direction of the longitudinal axis (11), wherein the coupling rod (62) and the control slide valve (40) delimit in their inside, in some sections, a third fluid space (53), which extends in the direction of the longitudinal axis (11), wherein the first fluid space (51) is fluidically connected via the third fluid space (53) to the outlet port (23),
**characterized in that** the third fluid space (53) is delimited in some sections by a pressure transmission pin (70), which extends with a constant second outer cross-sectional shape in the direction of the longitudinal axis (11), wherein the pressure transmission pin (70), with its end facing toward the armature (61), projects into the control slide valve (40), wherein it is supported, with its end facing away from the armature (61), at least indirectly against the housing (20), wherein a hydraulically effective area (74) of the second outer cross-sectional shape is larger than a hydraulically effective area (66) of the first outer cross-sectional shape.

2. Pressure regulating valve according to Claim 1,
wherein the control slide valve (40) is configured such that the hydraulic force exerted by the pressure at the inflow port (21) on the control slide valve (40) in the direction of the longitudinal axis (11) amounts to zero.

3. Pressure regulating valve according to one of the preceding claims,
wherein the control slide valve (40) is configured such that the hydraulic force exerted by the pressure at the return flow port (22) on the control slide valve (40) in the direction of the longitudinal axis (11) substantially amounts to zero.

4. Pressure regulating valve according to one of the preceding claims,
wherein the control slide valve (40), the coupling rod (62) and the armature (61) are configured such that the pressure at the outlet port (23) acts in the direction of the longitudinal axis (11) effectively on an area difference between the first outer cross-sectional shape and the second outer cross-sectional shape.

5. Pressure regulating valve according to Claim 4,
wherein a first and a second groove (43; 44) jointly delimit a first web (45) on the control slide valve (40), wherein the first web (45) is provided with at least one first radial bore (46), which runs transversely to the longitudinal axis (11) and which connects the outlet port (23) to the third fluid space (53).

6. Pressure regulating valve according to one of the preceding claims,
wherein a free cross-sectional area of the first orifice (41), upon a movement of the control slide valve toward the pole tube (60), becomes smaller.

7. Pressure regulating valve according to one of the preceding claims,
wherein the coupling rod (62) and the control slide valve (40) are configured separate from each other, wherein they are fixedly connected to each other.

8. Pressure regulating valve according to one of the preceding claims,
wherein the pole tube (60) is configured separate from the housing (20), wherein it is fixedly connected to the housing (20).

9. Pressure regulating valve according to one of the preceding claims,
wherein the control slide valve (40), together with the housing (20), delimits a fourth fluid space (54), the volume of which is variable by movement of the control slide valve (40), wherein in the control slide valve is arranged a connecting duct (47), which connects the fourth fluid space (54) fluidically to the return flow port (22).

10. Pressure regulating valve according to one of the preceding claims,
wherein the return flow port (22), at least in some sections, is arranged at a longitudinal end of the housing (20), which longitudinal end is facing away from the pole tube (60).

## Revendications

1. Soupape de régulation de pression (10) comprenant un carter (20) dans lequel un tiroir de commande (40) est reçu de manière mobile dans la direction d'un axe longitudinal (11), dans laquelle le carter (20) comprend un raccord d'entrée (21), un raccord de retour (22) et un raccord de sortie (23), dans laquelle le carter (20) forme, conjointement avec le tiroir de commande (40), un premier et un deuxième diaphragme (41 ; 42) dont les aires libres en section transversale peuvent être réglées en sens inverse par mouvement du tiroir de commande (40), dans laquelle le raccord d'entrée (21) est relié fluidiquement au raccord de sortie (23) par le biais du premier diaphragme (41), dans laquelle le raccord de retour (22) est relié fluidiquement au raccord de sortie (23) par le biais du deuxième diaphragme (42), dans laquelle une armature (61) est prévue, laquelle est reçue dans un tube polaire (60) de manière mobile dans la direction de l'axe longitudinal (11), dans laquelle l'armature (61) sépare l'un de l'autre un premier et un deuxième espace de fluide (51 ; 52) dans le tube polaire (60), espaces dont les volumes peuvent être réglés en sens inverse par déplacement de l'armature (61), dans laquelle l'armature (61) est couplée en déplacement au tiroir de commande (40) par le biais d'une tige d'accouplement (62), dans laquelle la tige d'accouplement (62) s'étend avec une première forme en section transversale extérieure constante dans la direction de l'axe longitudinal (11), dans laquelle la tige d'accouplement (62) et le tiroir de commande (40) délimitent dans certaines zones, dans leur intérieur, un troisième espace de fluide (53), lequel s'étend dans la direction de l'axe longitudinal (11), dans laquelle le premier espace de fluide (51) est relié fluidiquement au raccord de sortie (23) par le biais du troisième espace de fluide (53),
**caractérisée en ce que** le troisième espace de fluide (53) est limité dans certaines zones par une tige de transmission de pression (70), laquelle s'étend avec une deuxième forme en section transversale extérieure constante dans la direction de l'axe longitudinal (11), la tige de transmission de pression (70) pénétrant dans le tiroir de commande (40) par son extrémité tournée vers l'armature (61), la tige de transmission de pression étant supportée au moins indirectement sur le carter (20) par son extrémité opposée à l'armature (61), une aire (74) hydrauliquement effective de la deuxième forme en section transversale extérieure étant supérieure à une aire (66) hydrauliquement effective de la première forme en section transversale extérieure.

2. Soupape de régulation de pression selon la revendication 1,
dans laquelle le tiroir de commande (40) est réalisé de telle sorte que la force hydraulique exercée sur le tiroir de commande (40) par la pression au niveau du raccord d'entrée (21) dans la direction de l'axe longitudinal (11) est égale à zéro.

3. Soupape de régulation de pression selon l'une des revendications précédentes,
dans laquelle le tiroir de commande (40) est réalisé de telle sorte que la force hydraulique exercée sur le tiroir de commande (40) par la pression au niveau du raccord de retour (22) dans la direction de l'axe longitudinal (11) est sensiblement égale à zéro.

4. Soupape de régulation de pression selon l'une des revendications précédentes,
dans laquelle le tiroir de commande (40), la tige d'accouplement (62) et l'armature (61) sont réalisés de telle sorte que la pression au niveau du raccord de sortie (23) agit en direction de l'axe longitudinal (11) effectivement sur une différence d'aires entre la première forme en section transversale extérieure et la deuxième forme en section transversale extérieure.

5. Soupape de régulation de pression selon la revendication 4,
dans laquelle une première et une deuxième rainure (43 ; 44) délimitent conjointement une première nervure (45) sur le tiroir de commande (40), dans laquelle la première nervure (45) est dotée d'au moins un premier alésage radial (46) s'étendant transversalement à l'axe longitudinal (11), lequel alésage radial relie le raccord de sortie (23) au troisième espace de fluide (53).

6. Soupape de régulation de pression selon l'une des revendications précédentes,
dans laquelle une aire libre en section transversale du premier diaphragme (41) diminue lors d'un mouvement du tiroir de commande en direction du tube polaire (60).

7. Soupape de régulation de pression selon l'une des revendications précédentes,
dans laquelle la tige d'accouplement (62) et le tiroir de commande (40) sont réalisés séparément l'un de l'autre, dans laquelle ils sont reliés fixement l'un à l'autre.

8. Soupape de régulation de pression selon l'une des revendications précédentes,
dans laquelle le tube polaire (60) est réalisé séparément du carter (20), dans laquelle il est relié fixement au carter (20).

9. Soupape de régulation de pression selon l'une des revendications précédentes,
dans laquelle le tiroir de commande (40) délimite, conjointement avec le carter (20), un quatrième espace de fluide (54) dont le volume peut être modifié par mouvement du tiroir de commande (40), dans laquelle un canal de liaison (47) est disposé dans le tiroir de commande, lequel canal de liaison relie fluidiquement le quatrième espace de fluide (54) au raccord de retour (22) .

10. Soupape de régulation de pression selon l'une des revendications précédentes,
dans laquelle le raccord de retour (22) est disposé, au moins dans certaines zones, au niveau d'une extrémité longitudinale du carter (20) opposée au tube polaire (60) .
